# EUROPEAN PATENT APPLICATION

(11) **EP 2 858 193 A1**
(43) Date of publication of application: **08.04.2015**
(21) Application number: 14306555.5
(22) Date of filing: 02.10.2014
(51) Int. Cl.: H02H 1/00, H01H 71/00

(54) **A switching device and a method of controlling the same**

(30) Priority: 03.10.2013 SG 201307432
(71) Applicant: Schneider Electric Industries SAS, 92500 Rueil-Malmaison (FR)
(72) Inventor: Sun, Seng Kiat, 560211 Singapore (SG); Ardiansyah, Firman, 530941 Singapore (SG); Liew, Yew Loung, 730538 Singapore (SG)
(74) Representative: Manitz, Finsterwald & Partner GbR

(57) **Abstract**

A switching device and a method of controlling a switching device are provided, the switching device comprising a switching module configured to perform switching for an electric circuit; a processor module configured to control the switching module; and a communication module coupled to the processor module, the communication module configured to effect communication between the processor module and an external device, wherein the communication module is configured to communicate with the external device using a near field communication signal.

## Description

### Field of the Invention

Various embodiments relate to switching devices and methods of controlling switching devices.

### Background

In the context of industrial automation and industrial uses, switching devices are typically utilized to control or perform switching for e.g. an electrical circuit based on parameters inputted into the switching devices. For example, the switching device may be used to activate or deactivate a controlled device such as motor or lighting equipment, etc. In some examples, the switching device may be capable of providing an output signal suitable for activating the controlled device directly. In such a scenario, the switching device may act as an actuating device. In other examples, the switching device may be capable of providing a triggering signal to an intermediate actuator which is in turn used to activate or deactivate the controlled device. Such a triggering signal is usually small and therefore unsuitable for directly activating the controlled device (e.g., a high power motor).

Monitoring devices are also typically used to monitor electrical circuits and typically configured to send a control/trigger signal (such as a feedback signal) when monitoring thresholds are crossed. Therefore, such monitoring devices may broadly be known as switching devices as well. Settings for switching devices are typically manipulated manually and there is a desire to reduce errors or difficulties in manual settings.

One form of an industrial switching device is a relay. Relays are electrically operated switches that are typically used where there is a need to control an electrical circuit by a low-power signal such that there is complete electrical isolation between a controlling circuit and a controlled circuit, or where several electrical circuits are to be controlled by one signal. A relay may also function as a monitoring device in that trigger signals may be sent based on switching of the relay if a parameter monitored by the relay is above/below a predefined threshold. For example, a temperature controller relay or a timer relay may act as a monitoring device.

Relays may be categorized based on their working principles or operations. For example, a relay that activates after a predefined time delay or for a predefined period of time is a timer relay. Various timer relays may differ from one another based on different functions. Each timer relay may, for example, have a function selection of up to a maximum of 7 functions. The function selection may also be referred to as a selection of settings to manipulate the operation of the timer relay.

In another example, a relay that activates when a threshold or predetermined temperature is reached is a temperature controller relay. Various temperature controller relays may differ from one another based on different functions.

Similar to the timer relays and temperature controller relays, different function selections are also available for other different types of relays, for example, control relays. For example, a current may be input to a control relay and based on one possible function, the control relay performs measurements on the input current and determines an appropriate triggering output or actuating output.

Due to the limited number of functions selectable in each relay, a relay appropriate for use in one electrical circuit may not be appropriate for use in another electric circuit.

Digital or analog dials may be implemented on relays so that various function selections or settings can be input to manipulate the relays. The number of dials implemented may affect the number of settings that are realizable for a relay.

Typically, a dial comprises a member which provides a pointer or indication to specific markings on a settings panel. For example, for a control relay, when the member points to a 10% marking, it can mean that the control relay is monitoring a threshold of 10% of an operating level. In practice, control relays are typically used in panels which can comprise a plurality of such control relays. Thus, it can be a problem for a user to attempt to, for example, determine the set threshold level of a control relay since the user has to first locate the specific control relay and its dial member, and then read off the value on the settings panel of the control relay.

Moreover, more than one component of a relay may need to be controlled or selected at any one time. Thus, there may be multiple dials for different settings on a device. The difficulty of locating the member of a particular dial and then reading off respective values on the settings panel can increase with the increase in the number of dials on the device. Faced with a multitude of settings panels and dials, confusion may easily arise when a user needs to access, scrutinize and/or read off each value. As a result, efficiency may also be affected, for example during trouble-shooting sessions.

Adjustment of dials, especially analog dials, may also cause inaccuracy in the settings. Therefore, fine tuning options may be needed which lead to complexity in manufacture, for example, resulting in a complicated product line with many digital or analog dials at a relay frontage or user interface.

Relays may be remotely located or located in positions where a user may have difficulties in accessing them. Furthermore, in practice, relays may also be located or operated in low light conditions. In an environment of low light visibility, a user may additionally have a problem in controlling the relay, for example, reading off the values of the markings and positions of the dials, and causing adjustment of the dials to be difficult for the user.

In addition, for example in banks of relays, a relay may also be closely positioned or may be adjacent to another relay (i.e., a neighbouring relay). There may be difficulties in setting or controlling one or more specific relays arranged in these banks of relays, without affecting neighbouring relay(s).

Furthermore, relays may fail to operate or may be damaged under certain conditions. Failure analysis of the relays may prove to be helpful in identifying the root cause(s) so that improvements can be made and/or preventive measures can be taken. However, it is typically difficult to trace the settings and information (for example, the last mode of operation, firmware version, product setting and others) of a damaged relay returned by a customer as the relay may not be able to activated or powered due to damage. Even by analyzing the damaged relay along with an account of the events leading to the damage of the relay, it may prove to be difficult in identifying the root cause(s). For example, relays may fail to operate or may be damaged due to a system malfunctions. In the event where the root cause(s) cannot be identified, it can be significantly cumbersome for maintenance personnel to trace the faulty subsystem via troubleshooting process, for example, having to refer to a maintenance manual or a wiring diagram of the subsystem. Thus, the troubleshooting process can be time consuming and can lead to prolonged system downtime if not resolved quickly. In instances where critical applications are involved, the prolonged downtime can result in catastrophic issues, causing user dissatisfactions.

Thus, there is a need to provide a switching device and a method of controlling a switching device, seeking to address at least one of the problems mentioned.

### Summary of the Invention

In accordance with an aspect, there is provided a switching device comprising a switching module configured to perform switching for an electric circuit; a processor module configured to control the switching module; and a communication module coupled to the processor module, the communication module configured to effect communication between the processor module and an external device, wherein the communication module is configured to communicate with the external device using a near field communication signal.

The switching device may be a relay.

The processor module may be further configured to access information associated with the near field communication signal for communication with the communication module.

The communication module may comprise an antenna for communication with the external device.

The antenna may be at least one of a radial shaped antenna or a Y-shaped antenna.

The switching device may further comprise a memory module coupled to the processor module.

The memory module may be configured to store the information associated with the near field communication signal.

The memory module may be an electrically erasable programmable read-only memory.

The information may comprise a parameter of the switching device.

The parameter of the switching device may comprise a timing parameter of the switching device, or a control parameter of the switching device, or both.

The switching device may further comprise a display configured to indicate the information associated with the near field communication signal.

The display may comprise a liquid crystal display.

The near field communication signal may be configured to provide electromagnetic field energy to the switching device in a power-off mode.

In the power-off mode, the near field communication signal may be further configured to provide an instruction to read a last known status and/or setting of the switching device.

The near field communication signal may comprise a signal based on at least one of the ISO 13157 communication standard, the ECMA-340 communication standard, the ISO/IEC 18092 communication standard, the ISO/IEC 21481 communication standard, the ECMA-352 communication standard, the ISO 15693 communication standard, or the ISO/IEC 14443 communication standard.

In accordance with another aspect, there is provided a method of controlling a switching device, the method comprising providing a switching module configured to perform switching for an electric circuit; using a processor module to control the switching module; and effecting communication between the processor module and an external device using a near field communication signal.

The switching device may be a relay.

The step of effecting communication between the processor module and the external device may comprise receiving the near field communication signal via an antenna of the control device to determine receive information associated with the near field communication signal.

The method may further comprise activating the switching module based on the receive information associated with the near field communication signal.

The method may further comprise indicating the receive information associated with the near field communication signal via a display.

The method may further comprise storing the receive information associated with the near field communication signal in a memory module.

The method may further comprise retrieving switching device information from a memory module; forming transmit information associated with another near field communication signal; and transmitting the transmit information using the another near field communication signal to the external device.

The receive information may comprise a parameter of the switching device.

The transmit information may comprise a parameter of the switching device.

The parameter of the switching device may comprise a timing parameter of the switching device, or a control parameter of the switching device, or both.

The method may be performed with the switching device in a power-off mode.

The near field communication signal may be configured to provide electromagnetic field energy to the switching device in the power-off mode.

In the power-off mode, the near field communication signal may be further configured to provide an instruction to read a last known status and/or setting of the switching device.

The near field communication signal may comprise a signal based on at least one of the ISO 13157 communication standard, the ECMA-340 communication standard, the ISO/IEC 18092 communication standard, the ISO/IEC 21481 communication standard, the ECMA-352 communication standard, the ISO 15693 communication standard, or the ISO/IEC 14443 communication standard.

The external device may comprise a mobile device having a near field communication function.

The method may further comprise locating the external device at a distance of less than 25 cm from the switching device.

In accordance with yet another aspect, there is provided a non-transistory computer readable medium having stored thereon instructions for instructing a processor module of a switching device to execute a method of controlling the switching device, the method comprising controlling a switching module to perform switching for an electric circuit; and effecting communication between the processor module and an external device using a near field communication signal.

### Brief description of the drawings

Example embodiments of the invention will be better understood and readily apparent to one of ordinary skill in the art from the following written description, by way of example only, and in conjunction with the drawings, in which:
FIG. 1A is a schematic drawing of a near field communication (NFC) device communicating with a relay, in accordance with various example embodiments.
FIG. 1B is a schematic drawing illustrating a cross-section view of an exemplary embodiment of a relay operating in a first state.
FIG. 1C is a schematic drawing illustrating the cross-section view of the exemplary embodiment of the relay of FIG. 1B operating in a second state.
FIG. 1D is a schematic block diagram of an exemplary embodiment of a relay and components of the relay.
FIG. 2 is a schematic block diagram of a relay, in accordance with various example embodiments.
FIG. 3 is a schematic diagram illustrating a memory module coupled to an antenna, in accordance with various example embodiments.
FIG. 4A is a schematic diagram illustrating an example on how an external device provides electromagnetic field energy to an EEPROM in a power-off mode via an antenna, in accordance with various example embodiments.
FIG. 4B is a schematic diagram illustrating an example on how the external device transfers data to the EEPROM, in accordance with various example embodiments.
FIG. 4C is a schematic diagram illustrating an example on how the external device reads data from a communication module of a switching device, in accordance with various example embodiments.
FIG. 5A is a flow diagram of a method of controlling a switching device, in accordance with various example embodiments.
FIG. 5B is a flow diagram of a method of controlling a relay, in accordance with various example embodiments.
FIG. 6 is a schematic drawing of a communication device suitable for implementing an example embodiment.
FIG. 7A is a diagram illustrating an example of a graphic user interface of a smartphone used for settings of a relay, in accordance with various example embodiments.
FIG. 7B is a diagram illustrating an example of a graphic user interface of a smartphone used for diagnosis of the relay, in accordance with various example embodiments.
FIG. 7C is a diagram illustrating an example of a graphic user interface of a smartphone used for customizing settings of the relay, in accordance with various example embodiments.
FIG. 8A is a schematic drawing of a simplified example using radio frequency identification (RFID) technology or near field communication (NFC) technology.
FIG. 8B is a schematic drawing of another simplified example using radio frequency identification (RFID) technology or near field communication (NFC) technology.
FIG. 9 is a schematic drawing of a computing system suitable for implementing an example embodiment.
FIG. 10 is a schematic block diagram of a switching device, in accordance with various example embodiments.

### Detailed description of the preferred embodiments

The following detailed description refers to the accompanying drawings that show, by way of illustration, specific details and example embodiments in which the invention may be practiced. These embodiments are described in sufficient detail to enable those skilled in the art to practice the invention. Other embodiments may be utilized and structural, logical, and electrical changes may be made without departing from the scope of the invention. Some embodiments can be combined with one or more other embodiments to form new embodiments.

Example embodiments described in the context of one of the methods or devices are analogously valid for the other method or device. Similarly, example embodiments described in the context of a method are analogously valid for a device, and vice versa.

The example embodiments may also be implemented as hardware modules. A module is a functional hardware unit designed for use with other components or modules. For example, a module may be implemented using digital or discrete electronic components, or it can form a portion of an entire electronic circuit such as an Application Specific Integrated Circuit (ASIC). A person skilled in the art will understand that the example embodiments can also be implemented as a combination of hardware and software modules.

Additionally, when describing some embodiments, the disclosure may have disclosed a method and/or process as a particular sequence of steps. However, unless otherwise required, it will be appreciated the method or process should not be limited to the particular sequence of steps disclosed. Other sequences of steps may be possible. The particular order of the steps disclosed herein should not be construed as undue limitations. Unless otherwise required, a method and/or process disclosed herein should not be limited to the steps being carried out in the order written. The sequence of steps may be varied and still remain within the scope of the disclosure.

Further, in the description herein, the word "substantially" whenever used is understood to include, but not restricted to, "entirely" or "completely" and the like. In addition, terms such as "comprising", "comprise", and the like whenever used, are intended to be non-restricting descriptive language in that they broadly include elements/components recited after such terms, in addition to other components not explicitly recited. Further, terms such as "about", "approximately" and the like whenever used, typically means a reasonable variation, for example a variation of +/- 5% of the disclosed value, or a variance of 4% of the disclosed value, or a variance of 3% of the disclosed value, a variance of 2% of the disclosed value or a variance of 1% of the disclosed value.

Furthermore, in the description herein, certain values may be disclosed in a range. The values showing the end points of a range are intended to illustrate a preferred range. Whenever a range has been described, it is intended that the range covers and teaches all possible sub-ranges as well as individual numerical values within that range. That is, the end points of a range should not be interpreted as inflexible limitations. For example, a description of a range of 1% to 5% is intended to have specifically disclosed sub-ranges 1% to 2%, 1% to 3%, 1% to 4%, 2% to 3% etc., as well as individually, values within that range such as 1%, 2%, 3%, 4% and 5%. The intention of the above specific disclosure is applicable to any depth/breadth of a range.

As used herein, the term "and/or" includes any and all combinations of one or more of the associated listed items.

In the context of various embodiments, the term "switching device" broadly refers to a device that is used to control or switch at least one part of an industrial system. The switching device may act as an actuating device that directly activates or deactivates a controlled device, and/or may cover a monitoring device that is suitable for providing a feedback signal, or a control signal, or a trigger signal etc., if, for example, a monitoring threshold of the monitoring device is crossed/reached.

In some example embodiments, a switching or actuating device may be in the form of a relay.

In the context of various embodiments, the term "relay" broadly refers to an electrically operated switch that is positioned within an electric circuit, and typically has an open state to interrupt current from flowing through the circuit, and a closed state to allow current to flow through the circuit. It should be appreciated that in a different example, the relay may instead have a closed state to interrupt current from flowing through the circuit, and an open state to allow current to flow through the circuit. The relay may work based on an operating principle, for example, but not limited to, mechanical, optical or semiconductor technology.

The term "relay module" may refer to at least a part of the relay and may include an activation part and a switchable part. For example, in a mechanical relay, the activation part may refer to an electromagnetic coil and the switchable part may refer to an armature which is movable in the presence of an electromagnetic field of the electromagnetic coil. In another example, the activation part of an optical relay may refer to an optocoupler and the switchable part may refer to a photodiode which is activated based on a light signal received from the optocoupler. In yet another example of a semiconductor-based relay, the activation part and the switchable part may be realized by a solid-state switching device such as a thyristor activated by a controlled signal.

The term "processor module" as used herein may refer to, but is not limited to, a programmable analog and/or digital device that can store, retrieve, and process data; a microprocessor; a microcontroller; or any suitable processing device or apparatus. The processor module may generally include a part having processing capability but may also include another part not having any processing capability. For example, the processor module may include a microprocessor coupled to a memory module (or a memory chip).

The term "communication module" as used herein refers to an intermediate module arranged for communication between the processor module and an external device. The external device is not part of the relay as described herein.

As used herein, the term "effect communication" generally refers to allow or facilitate communication.

As used herein, the term "communicate" generally refers to transmit and/or receive.

As used herein, the term "near field communication" generally refers to a set of standards for smartphones and similar devices to establish radio communication with each other by touching them together or bringing them into close proximity.

The term "associated with" as used herein generally means having a relationship with. In the context of various example embodiments, the information associated with the near field communication signal refers to information in a form different from that of the near field communication signal. For example, the near field communication signal may include a modulated signal in which the information (for e.g., digital data) is encoded.

As used herein, the term "access" used with respect to the information may refer to retrieve or provide the information.

The term "coupled" as used in this description, or interchangeably referred to as "connected", is intended to cover both directly connected or connected through one or more intermediate means, unless otherwise stated.

As used herein, the term "parameter" may interchangeably be referred to as "value", "setting", "status", or "operating mode".

As used herein, the term "power-off mode" or power-off condition may interchangeably refer to a passive mode, or a power down mode, or a powerless mode, or an inactive mode, or a non-operational condition.

As used herein, the term "activating" means working, operating, turning on, triggering, or starting, etc.

Various example embodiments may provide a switching device with near field communication (NFC) technology. The switching device may include a monitoring device. In some example embodiments, the switching device may be a relay.

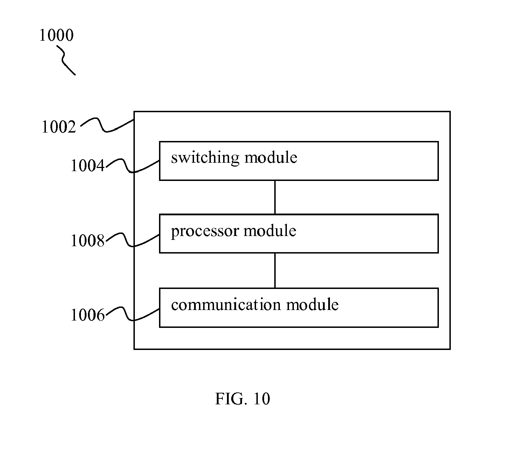

FIG. 10 shows a schematic diagram 1000 of a switching device 1002 in accordance with various embodiments. In FIG. 10, the switching device 1002 comprises a switching module 1004 configured to perform switching for an electric circuit; a processor module 1008 configured to control the switching module 1004; and a communication module 1006 configured to effect communication between the processor module 1008 and an external device (not shown), wherein the communication module 1006 is configured to communicate with the external device using a near field communication signal.

In various example embodiments, the switching module 1004 may be configured to generate at least one of a control signal, a feedback signal, or a trigger signal. For example, a trigger signal may be for switching on/off a power supply to an electrical circuit (such as switching a relay). In another example, the trigger signal (or control signal) may be an actuation signal for actuating a part of an electric circuit.

In the context of a monitoring type device, the switching module 1004 may, for example, facilitate generation of an error message. As described, monitoring is in a broad sense that a feedback (or control) signal is sent if monitoring thresholds are crossed.

In various embodiments, the switching device 1002 may be a relay, and the switching module 1004 may be a relay module configured to perform electrical switching for the electric circuit.

Various example embodiments may provide a timer relay or control relay which provide multiple functions in one product or as many functions as possible in one product. Users may select a function (or control) and/or time setting through a NFC device, therefore wirelessly connecting the relay to the NFC device. The relays in accordance with various example embodiments may be beneficial to manufacturers due to the simplified process and production control, as well as to distributors, sales and marketing personnel in view of the ease of promoting and introducing such relays.

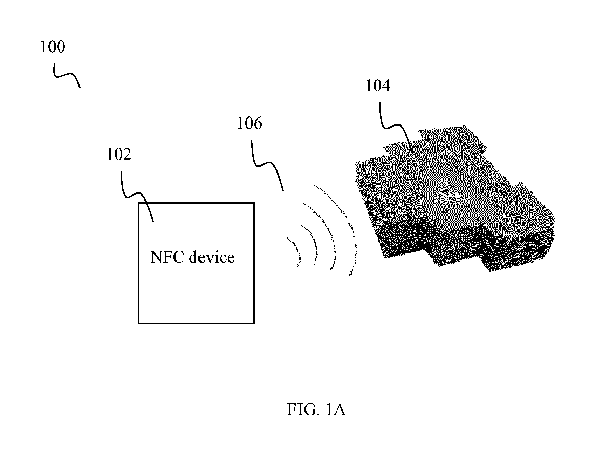

FIG. 1A shows a schematic drawing 100 of a NFC device 102 wirelessly communicating with a relay 104, in accordance with various embodiments. The relay may be described in the context of the switching device 1002 of FIG. 10. The communication link between the NFC device 102 and the relay 104 is based on a near field communication (NFC) signal 106. For example, an instruction signal which contains a setting may be transmitted in a form of the NFC signal 106 from the NFC device 102 to the relay 104. The relay 104 receiving the instruction signal may be programmed with the setting accordingly. In another example, the NFC device 102 may read data from the relay 104 using the NFC signal 106, for example, to obtain a setting and/or information relating to the relay 104.

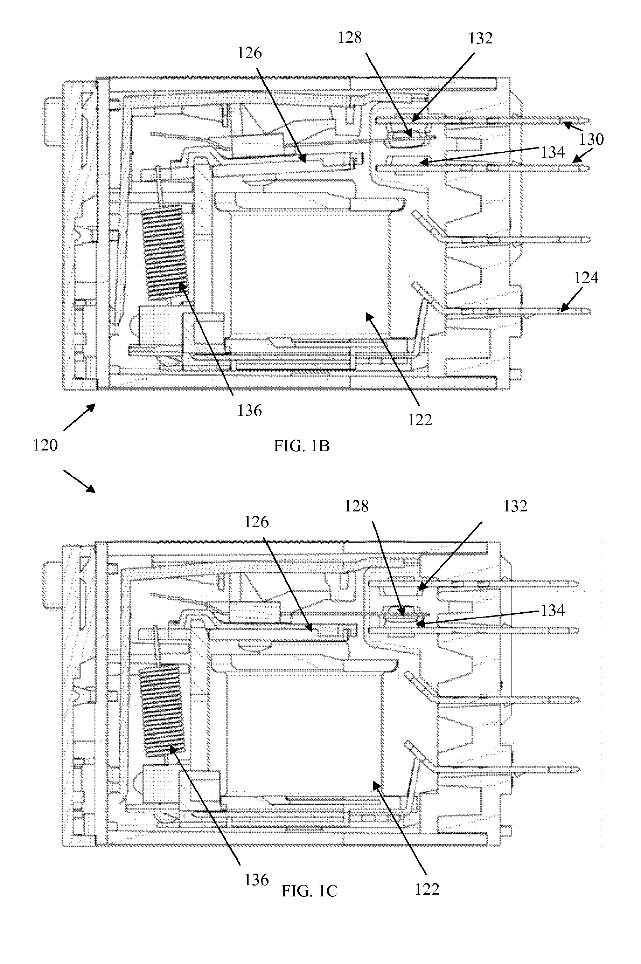

FIGs. 1B and 1C show schematic line drawings for illustrating an interior (i.e., cross-sectional view) of a relay in an example embodiment.

FIG. 1B illustrates a relay 120 in a first state. The relay 120 may be as described in the context of the relay 104 of FIG. 1A. The relay 120 comprises an energisable coil element such as an electromagnetic coil 122 that can affect a switch assembly. The electromagnetic coil 122 may be electrically powered or energized via leads e.g. 124. The switch assembly of the relay 120 comprises an armature 126 and a movable contact arm or contact 128 that is coupled to an end of the armature 126. The switch assembly is capable of sending a trigger signal via switching between leads e.g. 130. A Normally-Closed (NC) or "closed" contact 132 is provided on one of the leads e.g. 130 while a Normally-Open (NO) or "open" contact 134 is provided on another one of the leads e.g. 130. The movable contact 128 can switch between the contact 132, 134 positions. Further, the relay 120 comprises a biasing means such as a spring 136 to bias or retain the movable contact 128 in e.g. the normally closed contact 132 position.

When no power is supplied to the electromagnetic coil 122, the electromagnetic coil 122 and the relay 120 are not energized. Without energisation of the electromagnetic coil 122, the armature 126 is not attracted by magnetic force towards the electromagnetic coil 122. The movable contact 128, which is coupled at an end of the armature 126, remains biased in a first position. In the example embodiment, the first position is maintained by the spring 136 which retains/biases the armature 126 and movable contact 128, against a "closed" contact 132 of the relay 120. In the example embodiment, the armature 126 and the movable contact 128 are collectively referred to as a switch assembly or a relay module.

In an example, a command for energisation may be sent from an external device and sent via a near field communication (NFC) signal to a communication module coupled to a processor module of the relay.

FIG. 1C shows a second state of the relay 120. When power is supplied to the electromagnetic coil 122, the electromagnetic coil 122 and the relay 120 are energized. With sufficient power, the energized electromagnetic coil 122 generates a sufficient magnetic force to overcome the biasing force (generated by the spring 136) exerted on the armature 126. The magnetic force thus attracts armature 126 towards the electromagnetic coil 122. The movable contact 128 is moved to a second position, where it is switched and contacts an "open" (normally open) contact 134 of the relay 120.

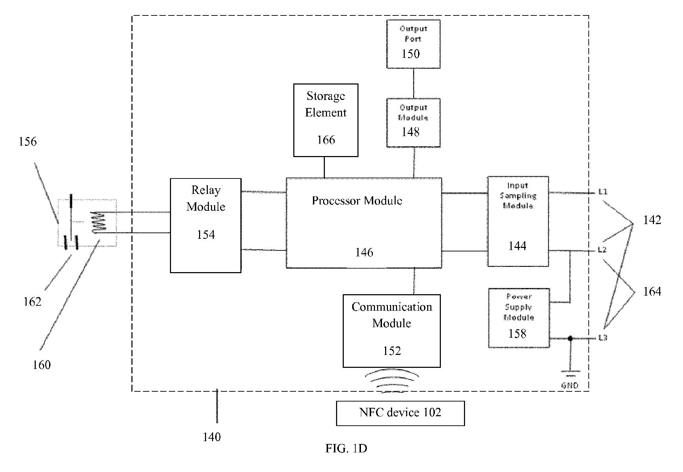

FIG. 1D is a schematic diagram illustrating a relay in an example embodiment. The relay may be described in the context of the relay 104 of FIG. 1A. In the example embodiment, the relay is a control relay 140. The relay 140 is configured to be coupled to a source to be monitored such as a three-phase power supply voltage source 142. The relay 140 can detect values of one or more parameters of the source to be monitored.

In the example embodiment, the relay 140 comprises an input sampling module 144 coupled to a processor module 146 that is in turn coupled to an output module 148. The output module 148 is coupled to an output port 150.

The processor module 146 is also coupled to a communication module 152, which is for communicating with, for example, an external device such as exemplified in the NFC device 102.

The processor module 146 is further coupled to a relay module 154 that can control a switch element 156 of the relay 140. The input sampling module 144 can couple to the source 142 using e.g. leads L1, L2, L3. A power supply module 158 is provided to supply power to the various components of the relay 140. The relay 140 may optionally comprise a teach module (not shown) coupled to the processor module 146 for instructing the processor module 146 to obtain a present sensed parameter as a working condition. The relay 140 may also be coupled to a programmable logic controller (not shown) for feedback.

In the example embodiment, the source indicated at numeral 142 is not limited to a three-phase voltage and can include various parameters for sources to be monitored such as single phase voltage, single phase current, temperature (from e.g. temperature sensors such as PT100, PTC, thermocouplers etc.), electrical signals associated with frequency characteristics, resistance (from e.g. resistor probes for liquid level sensing), and digital signals (from e.g. digital output sensors such as ultrasonic sensors, photo sensors, inductive sensors, pressure sensors etc.). Other parameters such as phase angle or power of a three-phase power supply may also be monitored. Accordingly, the relay 140 is not limited to monitoring power source parameters but may be adapted to monitor temperature, liquid level, speed, pressure, light, and other parameters that are suitable to be monitored.

The input sampling module 144 comprises a plurality of resistors and a linear voltage regulator for regulating voltage, and a plurality of capacitors for noise filtering purposes. The input sampling module 144 steps down and shifts a voltage level of the three-phase voltage from numeral 142 to a voltage level suitable to be processed by the processor module 146. It will be appreciated that the sampling module 144 can have different circuit arrangements in order to adapt to various kinds of physical input parameters from different sources for monitoring at numeral 142.

The processor module 146 accepts inputs from the input sampling module 144 and conducts processing. In the example embodiment, the processor module 146 can also compare a sampled parameter value (e.g. the voltage level) sampled at the input sampling module 144 against a working range for the relay 140. Optionally, the processor module 146 can accept a sampled parameter value (e.g. the voltage level) sampled at the input sampling module 144 as a working condition for the relay 140. For example, the sampled parameter value may be a voltage of 240V. In the example embodiment, the processor module 146 may set the working condition as 240V automatically. The working range is based on the working condition.

In the example embodiment, the processor module 146 also performs scaling operations. For example, using a working condition and one or more threshold levels, the processor module 146 applies the threshold levels to the working condition to obtain a working range. The processor module 146 can proceed to scale the working range to obtain intermediate levels within the working range. The processor module 146 automatically sets at least one intermediate level within the working range based on the threshold level. For example, if the threshold level is 5% tolerance over the working condition, an intermediate level of 2.5% over the working condition and within the working range may be set. Further intermediate levels of, for example, 1% may also be set by the processor module 146.

In the example embodiment, the output module 148 functions as a driver circuit for driving the operation of the output port 150. For example, the output module 148 accepts commands from the processor module 146 to turn on/off the output port 150. The output port 150 in the example embodiment is implemented as a display component. For example, the output port 150 can be a light emitting diode (LED) display or a liquid crystal display (LCD) to visually display, via intermediate levels, whether a monitored three-phase voltage level is having a tendency towards an under-voltage limit or an over-voltage limit.

The processor module 146 can comprise a microcontroller U1. U1 can be implemented using e.g. STM32F100C from STMicroelectronics or LPC1114 from NXP. Other components may be provided connected to the microcontroller as a supporting circuit to enable the microcontroller to function. It will be appreciated that the supporting circuit can vary depending on the type of microcontroller selected for implementation. In the example embodiment, the processor module 146 functions as an intelligent process element that interacts with the components within the relay 140. Processing in the processor module 146 is dependent on the firmware written.

The manipulation or settings set by the user using, for example, an external device is sensed by the communication module 152 and is translated into an electrical signal at the communication module 152. The signal is transmitted to the processor module 146 for processing at the processor module 146. The communication module 152 may also include or may be coupled to a user interface unit (not shown) that allows a user to control manipulation or settings directly at the relay 140. The external device (e.g., NFC device 102) may be communicating with the communication module 152 via NFC signals.

There are various types of manipulation or settings depending on the type of relay 140. In this example, possible manipulation or settings can include voltage range selection setting, under-voltage setting, over-voltage setting, etc. Asymmetry setting can be included as well. In an alternative example embodiment, for a relay 140 that is meant for monitoring frequency as a physical input type, possible manipulation or setting to be done by a user can include under-temperature setting, over-temperature setting, etc. The settings provide one or more threshold levels or "sets of conditions" that the relay 140 uses at the processor module 146 in order to determine whether the parameter values sampled at the source at numeral 142 fall within a working range based on these "sets of conditions".

In the example embodiment, the communication module 152 comprises a plurality of potentiometers meant for converting the setting set by the user to an electrical signal that can be transmitted and recognized by the processor module 146. It will be appreciated that the communication module 152 is not limited as such and can be expanded to more settings such as asymmetry, time setting, etc.

Therefore, in the example embodiment, the processor module 146 can set a working condition based on input from the input sampling module 144 and the processor module 146 can set a working range based on applying the one or more threshold levels to the working condition, the threshold levels supplied via the communication module 152. The processor module 146 can scale the working range to obtain intermediate levels within the working range. If a monitored value of the parameter of the source to be monitored reaches an intermediate level, an intermediate trigger signal is transmitted. The intermediate trigger signal can be transmitted by the processor module 146 instructing a LED showing an intermediate alert to be lit. If a monitored value of the parameter of the source to be monitored falls outside the working range, a trigger signal is transmitted. A LED showing a fault can also be lit.

The relay module 154 comprises a transistor T1 (not shown) for driving or controlling the switch element 156. In the example embodiment, when T1 is turned ON, the switch element 156 is energized or switched on. When T1 is turned OFF, the switch element 156 is de-energized or switched off. It will be appreciated that there are various possibilities to modify the design and/or to reverse the above logic depending on designer preference. The trigger signal can be a feedback signal to a programmable logic controller (not shown) for alerting the user.

In the example embodiment, the switch element 156 can be constructed as an electro-mechanical relay switch. The switch element 156 comprises a coil portion 160 and a contact portion 162. The coil portion 160 can be energized or de-energized by the relay module 154 in order to switch the position or logic of the contact portion 162. It will be appreciated that the switch element 156 can be any of electro-mechanical relay or solid-state switch.

In the example embodiment, the power supply module 158 functions as a power supply circuit of the relay 140. The power supply module 158 steps down and regulates an external power supply (see numeral 164) provided to the relay 140 to a voltage supply level that is suitable for the components in the relay 140.

With reference to FIG. 1D, numeral 164 at leads L2, L3 denotes an external source of supply voltage for the relay 140. In this example, the source of supply voltage is the same physical input of the relay 140 (i.e. at leads L2, L3). However, it will be appreciated that it is not necessary that the source of supply voltage to be the same as the input to the relay 140.

As described, a teach module (not shown) can be optionally included in the relay 140. The teach module can be provided for instructing the processor module 146 to obtain a present sensed parameter value as a working condition. In such a scenario, the processor module 146 ignores previously sensed values and sets a working condition. It will be appreciated that the teach module can be any electronics or electro-mechanical switch that functions to e.g. reset the processor module 146. The teach module can be activated by a user as an instructional input to instruct the processor module 146. In some example embodiments, the teach module may be provided as an actuator such as a button for the user.

It will be appreciated that the teach module can be excluded in alternative example embodiments whereby the relay 140 automatically recognises and/or memorises a detected parameter value as the working condition at each powering-up of the relay, that is, each initial detection of a power supply to the relay acts as an instructional input to instruct the processor module 146.

In the example embodiment, optionally, a storage element or memory 166 may be provided.

The storage element 166 or a storage/memory module of the communication module 152 can store all the information related to the parameters detected at the input sampling module 144. For example, the storage element 166 or the storage/memory module of the communication module 152 can store all instantaneous information of a three-phase voltage, the information including instantaneous voltage level, historical voltage level, frequency, historical faults that had happened etc. The storage element 166 can be, but is not limited to, an external memory module such as EEPROM, FLASH, PROM etc., or an integrated memory circuit embedded into the processor module 146.

For example, for information sending from the NFC device 102 to the relay 140 (or switching device), information received from the NFC device 102 via NFC communication is stored in a storage/memory module (e.g. EEPROM or random access memory (RAM)) within or coupled to the communication module 152, depending on the instruction of the processor module 146. For example, updates of firmware transmitted from the NFC device 102 may be stored into the RAM of the communication module 152 due to large size and the processor module 146 may sequentially transfer the RAM information into the storage element or memory 166 and thereafter, the processor module 146 may initiate a firmware updating process within the relay 140 (or switching device).

In another example, for information sending from the relay 140 (or switching device) to the NFC device 102, the processor module 146 stores the information into the EEPROM of or coupled to the communication module 152 before information is being transmitted to the NFC device 102. For example, historical settings of the relay 140 (or switching device) may be stored into the storage element or memory 166 and prior to sending the historical setting information, the processor module 146 sequentially transfers the historical setting information to the EEPROM of the communication module 152, and thereafter, the NFC device 102 retrieves the setting information from the EEPROM of the communication module 152 via NFC communication. For example, the latest product setting of the relay 140 (or switching device) is stored into the EEPROM of the communication module 152 in order to facilitate fast exchange of information.

Therefore, in the example embodiment, the relay 140 can function as a control and monitoring device for monitoring physical input parameters and to automatically determine the condition of the physical input parameters, i.e. whether the parameters are meeting one or more threshold levels set by a user, for example, using an external device in communication with the relay 140 using NFC signals. The relay 140 can reflect that status in terms of a digital form/feedback. This may be a trigger signal in terms of "closing a contact" or "opening a contact" if the switch element 156 is an electro-mechanical relay or in terms of "ON" or "OFF" if the switch element 156 is a solid-state switch. The relay 140 can be powered by a separate source of supply voltage or share the same source of supply voltage as the physical input parameters of the source to be monitored. In the example embodiment, the power source is preferably a three-phase power source, although other kinds of power sources may also be used. It will be appreciated that the power source may be either an alternating current (AC) or direct current (DC) power.

It should be appreciated that in another example embodiment, the relay of FIG. 1D may be a timer relay 140 comprising an input sampling module 144, a communication module 152, a processor module 146, an output module 148, an output port 150, a storage element 166, and a relay module 154. The circuitry for each module of the timer relay may be different from the circuitry for respective modules of the control relay in order for the different kinds of relay to perform the respective functions accordingly.

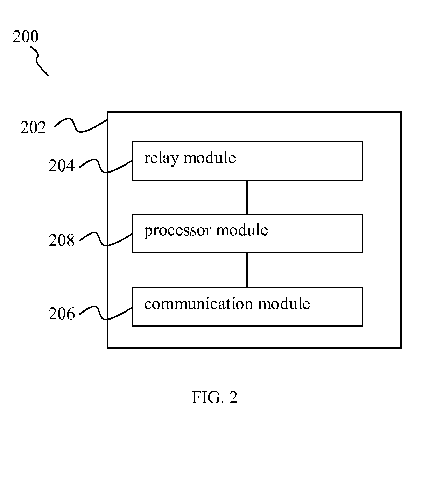

FIG. 2 shows a schematic block diagram 200 of a relay 202 in accordance with various embodiments. The relay 202 may be for an electric circuit (not shown in FIG. 2). In FIG. 2, the relay 202 comprises a switching module (e.g. the switching module 1004 of FIG. 10) such as a relay module 204 configured to perform electrical switching in relation to or for the electric circuit; a processor module 208 for instructing/controlling the relay module 204; and a communication module 206 coupled to the processor module 208, the communication module 206 configured to effect communication between the processor module 208 and an external device (not shown in FIG. 2). The communication module 206 is configured to communicate with the external device using a near field communication (NFC) signal. For example, the relay 202 may be as described in the context of the relay 104 of FIG. 1A or the relay 140 of FIG. 1D, the external device may refer to the NFC device 102 of FIGs. 1A and 1D, and the NFC signal may refer to the NFC signal 106 of FIG. 1A.

In an example embodiment, a generated signal in relation to an electric circuit may be a trigger signal generated by electrical switching of the relay module 204 in relation to or for the electric circuit.

For example, the relay module 204 may be as described in the context of the relay module 154 of FIG. 1D. The processor module 208 may be as described in the context of the processor module 1008 of FIG. 10 or the processor module 146 of FIG. 1D. The communication module 206 may be as described in the context of the communication module 1006 of FIG. 10 or the communication module 152 of FIG. 1D.

In one example embodiment, the communication module 206 may communicate with the processor module 208 in one form such as exemplified in data transfer through a data bus, while communicating with the external device in another form such as exemplified in a NFC signal.

In an example, in effecting communication between the processor module 208 and the external device, the external device may transmit or send a signal to the processor module 208 via the communication module 206. In another example, in effecting communication between the processor module 208 and the external device, the external device may receive or read a signal from the processor module 208 via the communication module 206.

In various example embodiments, the near field communication signal may include a signal based on at least one of the International Organization for Standardization (ISO) 13157 communication standard, the European Computer Manufacturers Association (ECMA) 340 communication standard, the International Organization for Standardization/ Information, Education and Communication (ISO/IEC) 18092 communication standard, the ISO/IEC 21481 communication standard, the ECMA-352 communication standard, the ISO 15693 communication standard, or the ISO/IEC 14443 communication standard (such as NFC Type I, NFC Type II, NFC Type III and NFC Type IV). It will be appreciated that the NFC signal is not limited to the above-named standards and is intended to be compliant with other subsequent or preceding NFC standards.

In one example, the near field communication signal may include an instruction signal containing settings for the relay 202. In another example, the near field communication signal may include a request for data transfer from the relay 202.

In various embodiments, the external device may include a mobile device having a near field communication function. The mobile device may be, but is not limited to, a communication device. For example, the external device may be a smartphone or a tablet computer, or a dedicated reader/transmitter.

In one embodiment, the processor module 208 may be further configured to access information associated with the near field communication signal, for communication with the communication module 206.

For example, the processor module may control the activation of the relay module 204 based on the information associated with the near field communication signal. The processor module may also detect the status of the relay module 204.

In various embodiments, the communication module 206 may include an antenna for communication with the external device. The antenna may be configured to transmit or receive the near field communication signal. For example, the antenna may be at least one of a radial shaped antenna or a Y-shaped antenna. The antenna may be formed on a printed circuit board coupled to or integrated with the circuitry of the relay module 204.

In various embodiments, the communication module 206 may further comprise a memory module coupled to the antenna. The memory module may also be coupled to the processor module 208 for reading and writing operations instructed by the processor module 208.

In one embodiment, the memory module may be configured to store the information associated with the near field communication signal. For example, the memory module may be, but is not limited to, an electrically erasable programmable read-only memory (EEPROM). The memory module may also refer to a NFC tag. In an example implementation, a chip-based NFC EEPROM tag such as M24LR16E-R from STMicroelectronics or NT3H1201 from NXP may be used. The information may be stored, tracked and retrieved by the external device. This may be advantageously useful for customer return analysis. For example, the last operating mode and/or other significant data may be stored into the EEPROM and these may be easily retrieved even if the product (for example, the relay 202) apart from the EEPROM is damaged.

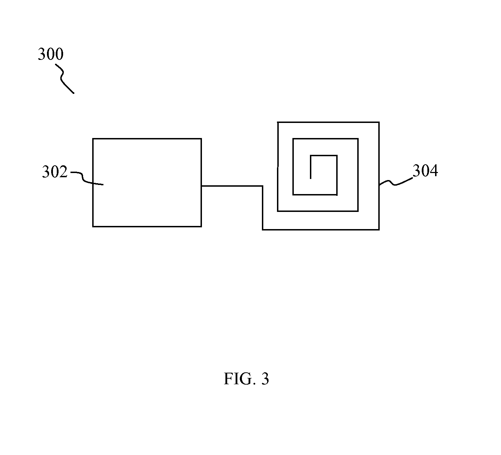

FIG. 3 shows a schematic diagram 300 illustrating a memory module such as an EEPROM 302 coupled to an antenna 304. The memory module and the antenna may be arranged as seen in FIG. 3 to facilitate the communication with an external device, for example, a NFC device (not shown in FIG. 3).

The EEPROM 302 and the antenna 304 may be as described above. The operating distance of the NFC communication may depend on the antenna design. It should be appreciated that the type of the EEPROM 302 and the design of the antenna 304 as well as the arrangement thereof shown in FIG. 3 are only exemplary and other possibilities with respect to the type of memory used and the antenna design as well as the arrangement thereof that conform to the PCB design rule may also be implemented.

Returning to FIG. 2, in various embodiments, the information may comprise a parameter of the relay module 204.

For example, the parameter of the relay module 204 may include a timing parameter of the relay module 204, or a control parameter of the relay module 204, or both.

In the context of the switching device (e.g., the switching device 1002 of FIG. 10), the information may comprise a parameter of the switching device. For example, the parameter of the switching device may include a timing parameter of the switching device, or a control parameter of the switching device, or both.

For example, when the external device (e.g. NFC device 102 of FIGs. 1A and 1D) downloads or uploads settings respectively to or from the switching device 140 (FIG. 1D) in a form of a timer relay, the timing parameter may be, but is not limited to, a timing function or a timing duration. Alternatively, for a control relay, the control parameter may be, but is not limited to, a parameter threshold and the timing parameter may be, but is not limited to, a time delay.

For example, when the external device (e.g. NFC device 102 of FIGs. 1A and 1D) retrieves/diagnoses an internal processing status of the switching device 140 (FIG. 1D) in a form of a timer relay, the timing parameter may be, but is not limited to, a percentage (%) of completion of a timing progress, a historical setting, an accumulated switching count of an output (e.g., the contact portion 162 of FIG. 1D), or user self-defined features (which may be specific timing function); and the control parameter may be, but is not limited to, ad-hoc control of an output status of the switching element 156 (FIG. 1D), or an update firmware to the switching device 140 (FIG. 1D). Alternatively, for a control relay, the control parameter may be, but is not limited to, real time values of input parameters, a historical setting, an accumulated switching count of the output (the contact portion 162 of FIG. 1D), ad-hoc control of the output status of the switching element 156 (FIG. 1D), or an update firmware to the switching device 140 (FIG. 1D); and the timing parameter may be, but is not limited to, user self-defined features (which may be in a form of hysteresis, or response time).

The relay 202 in accordance with various embodiments may omit or at least minimize the need for any digital or analog dial to set or control the relay 202 since the relay 202 may be programmed wirelessly for its operation(s) by communicating the relevant parameter(s) or setting(s) from the external device to the relay 202 using the NFC signal. Such wireless communication may advantageously reduce the complexity of the product line as the user interface or frontage of the relay 202 (for example, the front panel/face of the relay 202) may be kept simple in the absence of dials or at least with minimal dials, and therefore providing a relatively cost effective solution. The setting and timing accuracies of the relay 202 may also be increased without the use of analog dials.

In addition, the relay 202 in accordance with various embodiments may enhance its level of user friendliness in enabling complex functions for the settings to be easily and accurately input (or programmed) to operate the relay 202. These functions for settings may be predefined or customized, as further described in the examples below.

It may further prove to be efficient and accurate to control a plurality of relays (each being, for example, the relay 202 in accordance with various embodiments) wirelessly using a same function for settings, for example, during product testing or initialisation at a manufacturing line for the relays.

The use of a NFC signal between the external device and the relay 202 also provides ease of reading or retrieving data from the relay 202, for example, without a physical connection therebetween. This may be relatively cost effective and user friendly. Moreover, the capability to read or retrieve data of the relay 202 using NFC signals provides an avenue to perform diagnosis of the relay 202. Such a diagnostic function is not known to be available in currently known relays.

Further, the external device may be positioned at relatively close proximity to the relay 202, due to the operating range of NFC communication. This provides effective and independent communication between the external device and the relay 202, without affecting an adjacent relay that may be located relatively near the relay 202.

In various embodiments, the relay 202 may further comprise a display configured to indicate the information associated with the near field communication signal. The display may be positioned at the front panel/face of the relay 202. The various functions (or controls), and time settings may therefore be presented using the display at the frontage.

In one embodiment, the display may include a liquid crystal display (LCD).

In various embodiments, the near field communication signal may be configured to provide electromagnetic field energy to the relay 202 in a power-off mode.

For example, the power-off mode may occur when no independent source is provided to operate the relay 202 or when the relay 202 is damaged and therefore fails to operate in normal conditions.

Programming of the settings and/or retrieval of the settings and/or retrieval of last known status may be done with the relay 202 in accordance with various embodiments in the power-off mode. In one example embodiment, in the power-off mode, the near field communication signal may further be configured to provide an instruction to read a last known status and/or setting of the relay 202. This is possible as the relay 202 may be able to draw its operating power from the electromagnetic field energy of the NFC signal from the external device (for example, the NFC device 102 of FIGs. 1A and 1D).

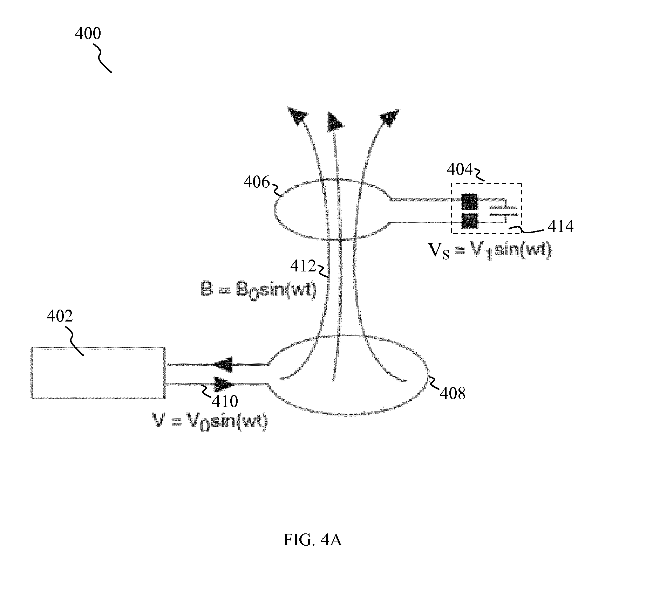

A simplified schematic diagram 400 illustrating an example on how an external device 402 provides electromagnetic field energy to an EEPROM 404 of a relay in a power-off mode via an antenna 406 is shown in FIG. 4A. The relay may be as described in the context of the relay 202 of FIG. 2 or the relay 104 of FIG. 1A or the relay 140 of FIG. 1D. For example, the external device 402, the EEPROM 404 and the antenna 406 may be as described above. For example, the external device 402 sends a wireless signal 410 denoted by V = V0sin(wt) via an antenna 408. The signal 410 is translated into a magnetic field 412 (or may be referred to as electromagnetic field energy) denoted by B = B0sin(wt) at the antenna 406 which is typically a wire or conductor in which current may be induced in the presence of the magnetic field 412. Thus, an induced power source 414 is provided denoted by Vs = V1sin(wt) for the EEPROM 404. V0, B0, and V1 represent the peak values of the respective signals, w represents angular frequency and t represents time. For example, the wireless signal 410 may be in a form of a NFC signal as described above.

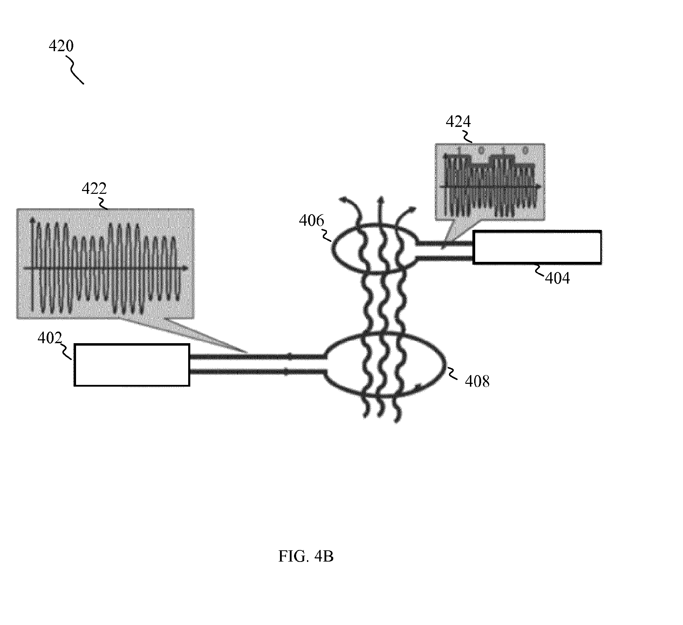

A simplified schematic diagram 420 illustrating an example on how the external device 402 may transfer data 422 to the EEPROM 404 is shown in FIG. 4B. In FIG. 4B, the external device 402 functions as a writer to transmit the data 422 (for example, settings instructions in a form of an amplitude modulated signal or in any other suitable form such as a frequency modulated signal or a pulsewidth modulated signal or others) via the antenna 408. The received data 424 in its bit form (for example, binary code 1010 as seen in FIG. 4B) may be stored in the EEPROM 404.

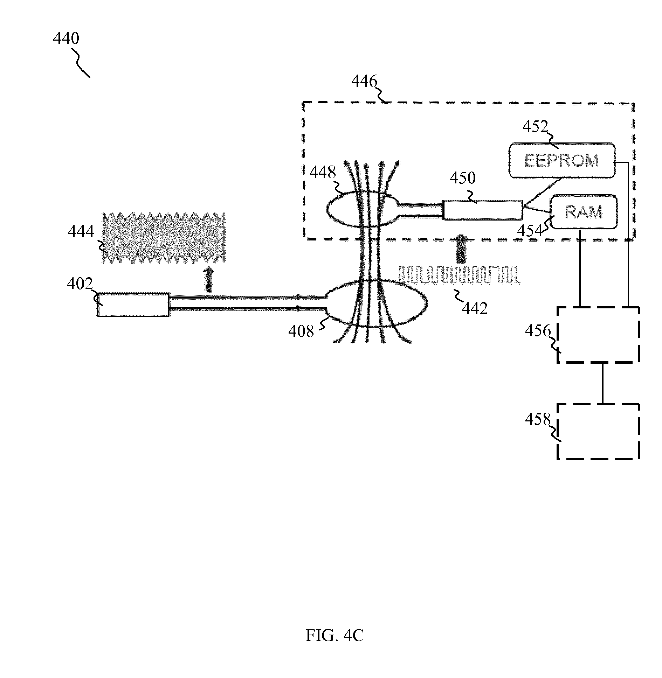

A simplified schematic diagram 440 illustrating an example on how the external device 402 may read data 442 from a communication module 446 is shown in FIG. 4C. The communication module 446 may be described in the context of the communication module 152 of FIG. 1D or the communication module 206 of FIG. 2. In FIG. 4C, the communication module 446 comprises an EEPROM 452 containing data 442 which the external device 402 functioning as a reader seeks to receive. The EEPROM 452 may be coupled to a microprocessor 450 which is separate/different from a processor module 456 and which is dedicated to operating the EEPROM 452. The EEPROM 452 may be described in the context of the EEPROM 404 of FIGs. 4A and 4B. The processor module 456 may be described in the context of the processor module 146 of FIG. 1D. As described above, the communication module 446 may be coupled to the processor module 456 which is in turn coupled to a storage element 458. The storage element 458 may be described in the context of the storage element 166 of FIG. 1D. The communication module 446 may further comprise a random access memory (RAM) 454 which is coupled to the microprocessor 450. The processor module 456 may also be coupled to the RAM 454. For example, processor start-up data may be stored in the RAM 454.

In FIG. 4C, the data 442 (for example, a pulse train) is transmitted via an antenna 448. The antenna 448 may be described in the context of the antenna 406 of FIGs. 4A and 4B. The received data 444, for example in a modulated form, is received at the external device 402 via the antenna 408. The external device 402 and the antenna 408 may be described in the context of the NFC device 102 (FIGs. 1A and 1D).The external device 402 then extracts information from the received data 444. It should be appreciated that various demodulation techniques may be used to extract the information. The data 442 stored in the EEPROM 452 may be data used for traceability and debugging purposes.

It should be understood and appreciated that the data transfer between the external device 402 and the EEPROM 404 as described in FIG. 4B and between the external device 402 and the communication module 446 as described in FIG. 4C may be performed under the power-off mode as described above (FIG. 4A) or under a power-on mode where an energy source is provided to power/operate the relay. The energy source is different from the energy provided by the external device 402 as described in FIG. 4A.

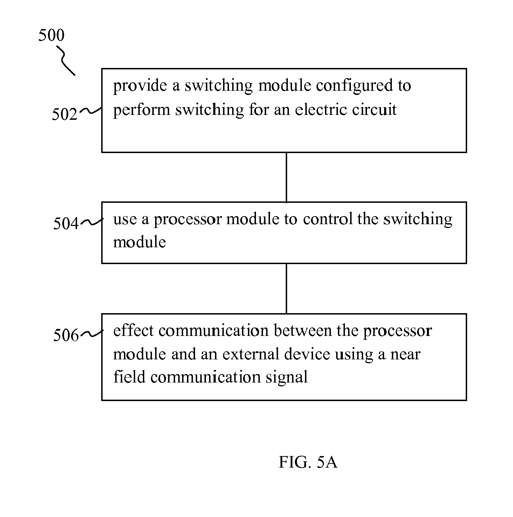

FIG. 5A shows a flow diagram 500 of a method of controlling a switching device, in accordance with various embodiments. At step 502, a switching module configured to perform switching for an electric circuit is provided. At step 504, a processor module to control the switching module is used.

At step 506, communication between the processor module and an external device is effected using a near field communication signal.

For example, the switching device may be as described in the context of the switching device 1002 of FIG. 10, the switching module may be as described in the context of the switching module 1004 of FIG. 10, the processor module may be as described in the context of the processor module 1008 of FIG. 10, and the external device may be as described in the context of the NFC device 102 of FIGs. 1A and 1D.

In various embodiments, the switching module may be a relay module configured to perform electrical switching for the electric circuit.

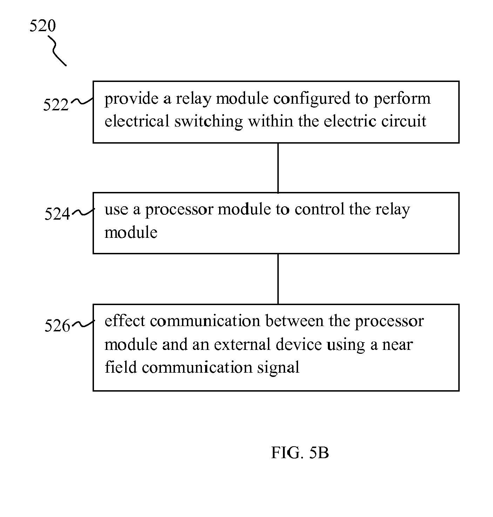

In the context where the method of controlling a switching device 500 comprises a method of controlling a relay, FIG. 5B shows a flow diagram 520 of the method of controlling the relay, in accordance with various embodiments. At step 522, a relay module configured to perform electrical switching for an electric circuit is provided. At step 524, a processor module to control the relay module is used. At step 526, communication between the processor module and an external device is effected using a near field communication signal.

The terms "relay", "relay module", "effect", "communication", and "external device" may be as described above. For example, the relay may be as described in the context of the relay 202 of FIG. 2 or the relay 104 of FIG. 1A or the relay 140 of FIG. 1D, the relay module may be as described in the context of the relay module 204 of FIG. 2, and the external device may be as described in the context of the NFC device 102 of FIGs. 1A and 1D.

It should be appreciated and understood that the steps and features relating to the method of controlling the switching device (FIG. 5A) are applicable to the corresponding steps and features relating to the method of controlling the relay (FIG. 5B).

For example, the switching device may comprise a communication module coupled to the processor module. At step 506, communication between the processor module and the external device may, for example, be effected via the communication module.

The term "near field communication" may be as described above. For example, the near field communication signal may comprise a signal based on at least one of the ISO 13157 communication standard, the ECMA-340 communication standard, the ISO/IEC 18092 communication standard, the ISO/IEC 21481 communication standard, the ECMA-352 communication standard, the ISO 15693 communication standard, or the ISO/IEC 14443 communication standard (such as NFC Type I, NFC Type II, NFC Type III or NFC Type IV). In one example, the near field communication signal may contain an instruction containing settings for the switching device (e.g., a relay). In another example, the near field communication signal may contain a request for data transfer from the switching device (e.g., the relay). It will be appreciated that the NFC signal is not limited to the above-named standards and is intended to be compliant with other subsequent or preceding NFC standards.

In various embodiments, the method 500 of FIG. 5A may further include locating or synchronizing or performing a handshaking procedure with the external device at a distance of less than 25 cm from the switching device (e.g., a relay). For example, the external device may be located at a distance of less than 20 cm, less than 15 cm, less than 10 cm, or less than 5 cm from the switching device (e.g., a relay). In an example, the distance between the external device and the switching device (e.g., a relay) may be in, but is not limited to, a range of about 1 cm to about 3 cm, about 1 cm to about 5 cm, about 5 cm to about 10 cm, about 10 cm to about 15 cm, about 15 cm to about 20 cm, or about 20 cm to about 25 cm.

In one example embodiment, the step of effecting communication between the processor module and the external device at step 506 may comprise receiving the near field communication signal via an antenna of the switching device (e.g., a relay) to determine receive information associated with the near field communication signal.

The receive information associated with the near field communication signal refers to information associated with a received near field communication signal. The term "associated with" may be as described above. Thus, as previously described, in the context of various embodiments, the information associated with the near field communication signal refers to information in a form different from that of the near field communication signal. For example, the near field communication signal may include a modulated signal in which the information (for e.g., digital data or instruction) is encoded.

The term "determine" may be as described above and in this context, may be interchangeably referred to as obtain, evaluate, demodulate, decode, translate, assess, retrieve, extract, or compute, etc.

For example, the determination of information (e.g., the receive information) may comprise accessing this information by the processor module. The processor module may be as described above.

The term "antenna" may be as described above. For example, the antenna may be at least one of a radial shaped antenna or a Y-shaped antenna.

In one example embodiment, the method 500 of FIG. 5A may further include activating the switching module (e.g., a relay module) based on the receive information associated with the near field communication signal.

The step of activating the switching module (e.g., a relay module) may, for example, be referred to as setting the switching device (e.g., a relay). For example, when the switching module in the form of a relay module is activated, the switching for the electric circuit may be performed.

The activation of the switching module (e.g., a relay module) may also depend on the information (e.g., the receive information) associated with the near field communication signal. This information may comprise a parameter of the switching device (e.g., a relay). The term "parameter" may be as described above. For example, the parameter of the switching device (e.g., a relay) may include a timing parameter of the switching device (e.g., a relay), or a control parameter of the switching device (e.g., a relay), or both. Examples of the timing parameter and the control parameter may be as described hereinabove.

In one illustrative example in the context of a relay, the information may contain a specific time delay (which is an example of a timing parameter) such that the relay module may only activate after this specific time delay has expired. In another illustrative example in the context of a relay, the information may contain a binary switching pattern (which may be an example of a combination of a timing parameter and a control parameter) such that the relay module may activate when the binary switching pattern is at "1" for a time period based on the timing parameter. The relay module may remain inactivated or at rest when the binary switching pattern is at "0" for another time period based on the same or a different timing parameter.

For a switching device including a monitoring device, the parameter may be e.g. a voltage reading, a current reading, etc.

In various embodiments, the method 500 of FIG. 5A may further include indicating the receive information associated with the near field communication signal via a display.

The term "display" may be as described above. For example, the display may include a LCD.

In various embodiments, the method 500 of FIG. 5A may further include storing the receive information associated with the near field communication signal in a memory module.

In one embodiment, the method may further comprise retrieving information (such as relay information) from a memory module; forming transmit information associated with another near field communication signal; and transmitting the transmit information using the another near field communication signal to the external device.

The transmit information may comprise a parameter of the switching device (e.g., a relay). The term "parameter" may be as described above.

The term "memory" may be as described above. For example, the memory module may be coupled to the antenna. The memory module may include, but is not limited to, an electrically erasable programmable read-only memory (EEPROM). The memory module may also refer to a NFC tag. In an example implementation, a chip-based NFC EEPROM tag such as M24LR16E-R from STMicroelectronics or NT3H1201 from NXP may be used.

In various embodiments, the method 500 of FIG. 5A may be performed with the switching device (e.g., a relay) in a power-off mode. The near field communication signal may be configured to provide electromagnetic field energy to the switching device (e.g., a relay) in the power-off mode. In the power-off mode, the near field communication signal may further be configured to provide an instruction to read a last known status and/or setting of the switching device (e.g., a relay).

The term "power-off mode" may be as described above.

As previously described, in various embodiments, the external device may be in a form of a mobile device having a near field communication function. The mobile device may be, but is not limited to, a communication device. For example, the external device may be a smartphone or a tablet computer.

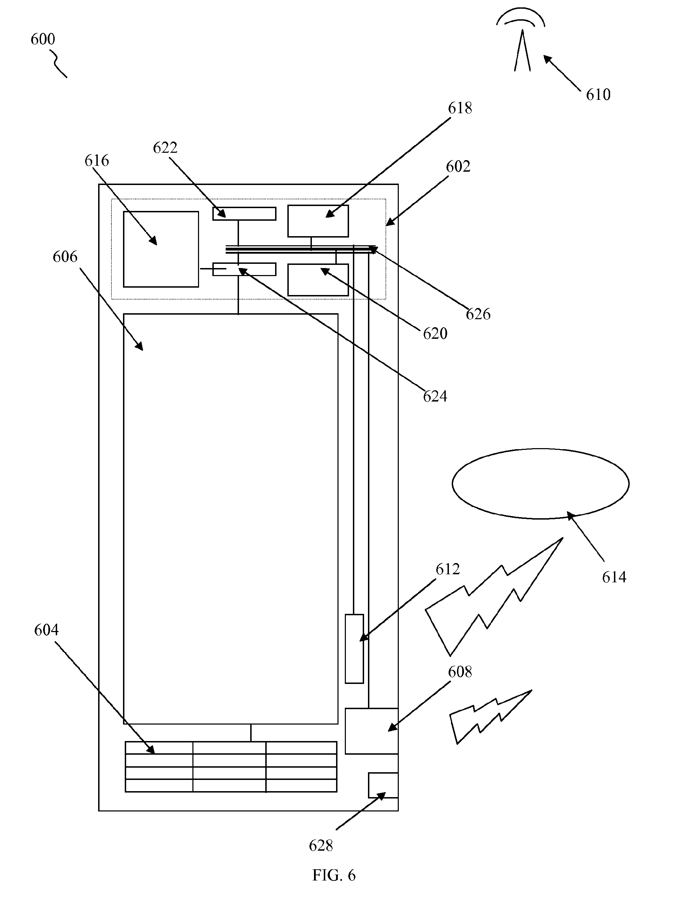

Different example embodiments can be implemented in the context of data structure, program modules, program and computer instructions executed in a communication device (for example, the external device described herein). An exemplary communication device is briefly disclosed herein. One or more example embodiments may be embodied in one or more communication devices e.g. 600, such as is schematically illustrated in FIG. 6.

One or more example embodiments may be implemented as software, such as a computer program being executed within a communication device 600, and instructing the communication device 600 to conduct a method of an example embodiment.

The communication device 600 includes a processor module 602, an input module such as a touchscreen interface or a keypad 604 and an output module such as a display 606 on a touchscreen.

The processor module 602 is coupled to a first communication unit 608 for communication with a cellular network 610. The first communication unit 608 can include, but is not limited to, a subscriber identity module (SIM) card loading bay. The cellular network 610 can, for example, be a 3G or 4G network.

The processor module 602 is further coupled to a second communication unit 612 for connection to a network 614. For example, the second communication unit 612 can enable access to e.g. the Internet or other network systems such as Local Area Network (LAN) or Wide Area Network (WAN) or a personal network. The network 614 can include a server, a router, a network personal computer, a peer device or other common network node, a wireless telephone or wireless personal digital assistant. Networking environments may be found in offices, enterprise-wide computer networks and home computer systems, etc. The second communication unit 612 can include, but is not limited to, a wireless network card or an ethernet network cable port. The second communication unit 612 can also be a modem/router unit and may be any type of modem/router such as a cable-type modem or a satellite-type modem. In one example, the second communication unit 612 may also be a NFC reader/transmitter, which may communicate with a switching device (e.g. a relay) using a NFC signal. The switching device may be, for example, as described in the context of the switching device 1002 of FIG. 10. In the example of a relay, the relay may be as described in the context of the relay 104 of FIG. 1A, the relay 140 of FIG. 1D, or the relay 202 of FIG. 2.

It will be appreciated that network connections shown are exemplary and other ways of establishing a communications link between computers can be used. The existence of any of various protocols, such as TCP/IP, Frame Relay, Ethernet, FTP, HTTP and the like, is presumed, and the communication device 600 can be operated in a client-server configuration to permit a user to retrieve web pages from a web-based server. Furthermore, any of various web browsers can be used to display and manipulate data on web pages.

The processor module 602 in the example includes a processor 616, a Random Access Memory (RAM) 618 and a Read Only Memory (ROM) 620. The ROM 620 can be a system memory storing basic input/ output system (BIOS) information. The RAM 618 can store one or more program modules such as operating systems, application programs and program data.

The processor module 602 also includes a number of Input/Output (I/O) interfaces, for example I/O interface 622 to the display 606, and I/O interface 624 to the keypad 604.

The components of the processor module 602 typically communicate and interface/couple connectedly via an interconnected bus 626 and in a manner known to the person skilled in the relevant art. The bus 626 can be any of several types of bus structures including a memory bus or memory controller, a peripheral bus, and a local bus using any of a variety of bus architectures.

It will be appreciated that other devices can also be connected to the system bus 626. For example, a universal serial bus (USB) interface can be used for coupling an accessory of the communication device, such as a card reader, to the system bus 626.

The application program is typically supplied to the user of the communication device 600 encoded on a data storage medium such as a flash memory module or memory card/stick and read utilising a corresponding memory reader-writer of a data storage device 628. The data storage medium is not limited to being portable and can include instances of being embedded in the communication device 600.

The application program is read and controlled in its execution by the processor 616. Intermediate storage of program data may be accomplished using RAM 618. The method(s) of the example embodiments can be implemented as computer readable instructions, computer executable components, or software modules. One or more software modules may alternatively be used. These can include an executable program, a data link library, a configuration file, a database, a graphical image, a binary data file, a text data file, an object file, a source code file, or the like. When one or more processor modules execute one or more of the software modules, the software modules interact to cause one or more processor modules to perform according to the teachings herein.

The operation of the communication device 600 can be controlled by a variety of different program modules. Examples of program modules are routines, programs, objects, components, data structures, libraries, etc. that perform particular tasks or implement particular abstract data types.

The example embodiments may also be practiced with other computer system configurations, including handheld devices, multiprocessor systems/servers, microprocessor-based or programmable consumer electronics, network PCs, minicomputers, mainframe computers, personal digital assistants, mobile telephones and the like. Furthermore, the example embodiments may also be practiced in distributed computing environments where tasks are performed by remote processing devices that are linked through a wireless or wired communications network. In a distributed computing environment, program modules may be located in both local and remote memory storage devices.

As previously discussed, the external device described herein may refer to a communication device (for example, the communication device 600 of FIG. 6). For example, the external device may be a smartphone and the program modules or software thereof may be in a form of an application, also referred to as an "App". The "App" for controlling a switching device (e.g., a relay) in accordance with various embodiments may include graphic user interfaces to allow a user to manipulate the types of controls, input settings, and to read outputs from the switching device (for example, the switching device 1002 of FIG. 10) (or e.g., the relay as exemplified in the relay 202 of FIG. 2 or the relay 104 of FIG. 1A or the relay 140 of FIG. 1D).

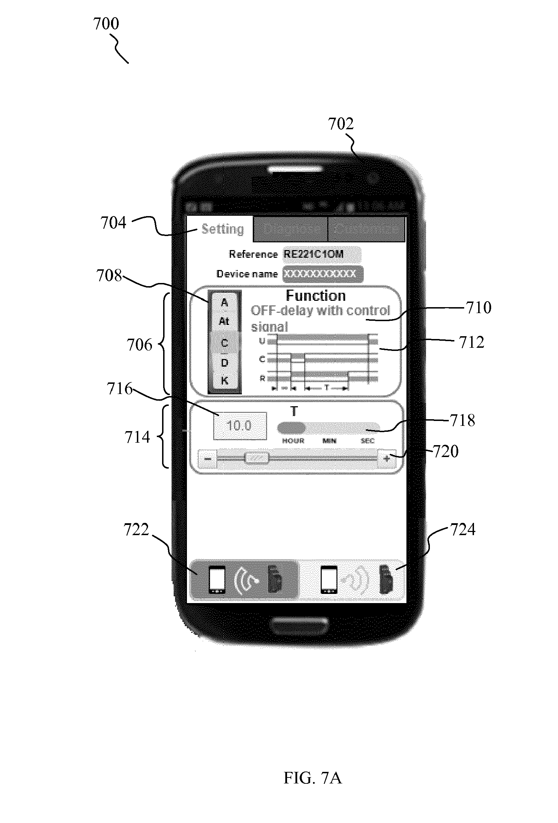

One example of a graphic user interface 700 of a smartphone 702 as seen in FIG. 7A may be used for providing settings of a switching device, more specifically, a relay (not shown). The graphic user interface 700 comprises an active tab 704 indicating "Setting" for the current type of control, a function box 706 for indicating a predefined function 708 with a description 710 and a signal diagram 712 of the predefined function 708. In this example, the graphic user interface 700 further comprises a timer box 714 for inputting/selecting or displaying a value and unit of a time period T as indicated in the signal diagram 712.

The timer box 714 comprises a numerical input/display 716 for the value of T, a unit selector 718 reflecting whether T is in terms of hours, minutes or seconds, and a value changer 720 for increasing or decreasing the value of T. The ranges for T may be, for example, from 0.1 - 100.0 hours, from 0.1 - 999.9 minutes, or from 0.1 - 999.9 seconds.

The App having the graphic user interface 700 of FIG. 7A may reflect an example where the settings may be sent from the smartphone 702 to the relay. In this case, the value of "10.0" may be input directly to the numerical input/display 716 which may be a touchscreen input element. Alternatively, the value changer 720 may be used to adjust to the value of "10.0" as reflected in the numerical input/display 716.

Furthermore, the App having the graphic user interface 700 of FIG. 7A may also reflect a different example where the settings from the relay are received or read by the smartphone 702. In this different example, the value of "10.0" may be the numerical value of the settings read from the relay (and may be subsequently re-configured to another value).

The graphic user interface 700 may also comprise a receiving indicator 722 for indicating that the smartphone 702 is receiving or is to receive data from the relay, and/or a transmitting indicator 724 for indicating that the smartphone 702 is sending or is to send data to the relay. For example, in FIG. 7A, the receiving indicator 722 is activated to show that the smartphone 702 is receiving, or is to receive, from the relay data regarding the settings.

It should be understood that there are other possible graphic user interfaces usable for settings and/or readings of the relay and these may appear different in terms of layout and design from the example of FIG. 7A. It should also be appreciated that various functions with different settings are also possible. For example, two or more timer boxes (substantially similar to the timer box 714 of FIG. 7A) may be used for two or more different time periods of the signal diagram (not shown in FIG. 7A).

For example, in use, when a user wants to obtain/request the settings of a targeted relay, the user touches the receiving indicator 722 to activate a receiving module at a NFC receiver of the smartphone 702. The receiving module may first send a handshake signal with the request message to establish a communication link with the targeted relay. The handshake signal may be a NFC signal. Thereafter, the receiving module may enter a polling mode to await a link with the relay. Once the communication link is established, the targeted relay then transmits a different NFC signal containing the requested settings to the NFC receiver of the smartphone 702. This different NFC signal may contain, for example, the settings having data formats as described in Table 1 below. For example, eight bits (i.e., Bit 7 to Bit 0) at radio frequency (RF) block address 0 may be used to represent a timing function identity, while the rest of Bit 31 to Bit 8 at RF block address 0 may be reserved. A processor module of the smartphone 702 subsequently processes the received signal to obtain the settings, which are then displayed on the graphic user interface 700 as described above.

In a different example, in use, when a user wants to set/instruct a targeted relay, the user may input to the graphic user interface 700 by touching the function box 706 to select a predefined function 708 or the timer box 716 (i.e., the numerical input/display 716, the unit selector 718, and/or the value changer 720) to program a setting for the targeted relay. The user then touches the transmitting indicator 724 to activate a NFC transmitter of the smartphone 702. The inputs to the graphic user interface 700 may be queued/stored at the processor module of the smartphone 702 and may be modulated in one or more of the data formats as described in Table 1 below. For example, the input may be a time setting in terms of hours:minutes:seconds:hundredths of a second. Thirty-two bits at RF block address 1 may be used to represent the time setting where the denominations of hours, minutes, seconds or hundredths of a second, are represented by eight bits each (i.e., Bit 31 to Bit 24 for hours; Bit 23 to Bit 16 for minutes; Bit 15 to Bit 8 for seconds; Bit 7 to Bit 0 for hundredths of a second). For an illustrative exemplary time setting of 91 hours 32 minutes and 12.65 seconds, the data may be 0x91321265. The setting/instruction may then be transmitted to the relay in a NFC signal.

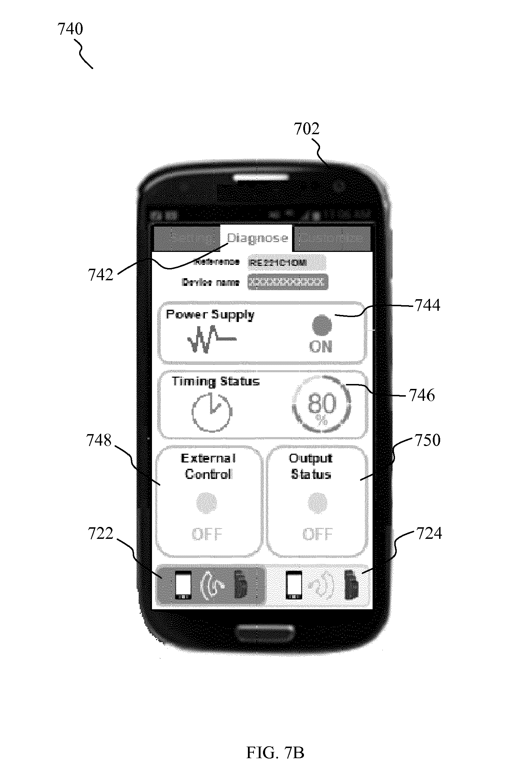

In FIG. 7B, one example of a graphic user interface 740 of a smartphone 702 may be used for diagnosis of the relay (not shown). The graphic user interface 740 comprises an active tab 742 indicating "Diagnose" for the current type of control, a power supply indicator 744 for indicating a status of the power supply for the relay, and a timing indicator 746 for indicating a status of the timing set of the relay. As can be seen in FIG. 7B, when the active tab 742 indicates "Diagnose", the "Setting" tab 704 (FIG. 7A) becomes inactive by dimming or greying the tab's background and the contents of the "Setting" tab 704 (FIG. 7A) appear hidden behind the contents of the active "Diagnose" tab 742. In FIG. 7B, the power supply indicator 744 is at "ON" status and the timing indicator 746 shows a timing status of 80% completion, e.g., before switching or triggering the relay.

In this example, the graphic user interface 740 further comprises an external control box 748 and an output box 750. The external control box 748 and the output box 750 may, for example, respectively show the status of an external control of the relay and the status of an output of the relay.

Similar to FIG. 7A, the graphic user interface 740 in the example of FIG. 7B has the receiving indicator 722 activated to show that the smartphone 702 is receiving or is to receive from the relay data regarding the settings.

It should be understood that there are other possible graphic user interfaces usable for diagnosis of the relay and these may appear different in terms of layout and design from the example of FIG. 7B. In a different example, not shown in FIG. 7B, the external control box 748 may include a touchscreen input element to change the status of the external control, and/or the output box 750 may include a touchscreen input element to change the status of the output.

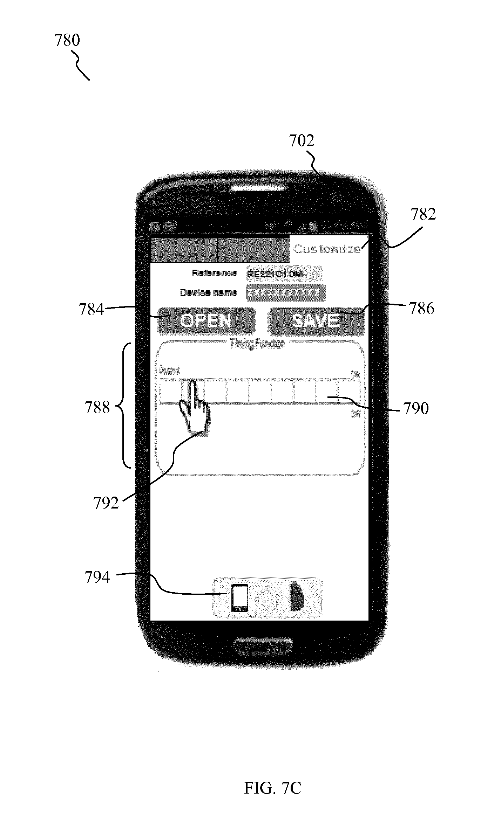

In FIG. 7C, one example of a graphic user interface 780 of a smartphone 702 may be used for customizing settings of the relay (not shown). The graphic user interface 780 comprises an active tab 782 indicating "Customize" for the current type of control, an OPEN button 784 for opening a stored customized function, a SAVE button 786 for saving a current customized function, and a function box 788 for customizing. As can be seen in FIG. 7C, when the active tab 782 indicates "Customize", the "Diagnose" tab 742 (FIG. 7B) becomes inactive by dimming or greying the tab's background and the contents of the "Diagnose" tab 742 (FIG. 7B) appear hidden behind the contents of the active "Customize" tab 782.

In FIG. 7C, the function box 788 includes a timing frame 790 with segments, each of which can be set to "ON" or "OFF" using a cursor or pointer 792. With the desired segments of the timing frame 790 set to "ON" while the rest are at "OFF", a signal diagram (for example, a timing pattern) may be formed and then sent to the relay. The graphic user interface 780 in the example of FIG. 7C further indicates an activated transmitting indicator 794 (substantially similar to the transmitting indicator 724 of FIG. 7A) showing that the smartphone 702 is sending, or is to send, data to the relay.

It should be understood that there are other possible graphic user interfaces usable for customizing settings of the relay and these may appear different in terms of layout and design from the example of FIG. 7C. In a different example, a time setting control box (not shown in FIG. 7C, but may be similar to the timer box 714 of FIG. 7A) may also be used to input the value and unit of the time period provided by the respective segments of the timing frame 790 of FIG. 7C so that the timing pattern has specific time periods.

The graphic user interfaces, for example those shown in FIGs. 7A, 7B and 7C, may be realized by various program modules or other applications ("Apps"). For NFC communication, these Apps may reserve radio frequency (RF) block addresses and Inter-Integrated Circuit (I2C) byte addresses to facilitate communication with peripherals. These addresses may have different predetermined data bit formats as exemplarily shown in Table 1.

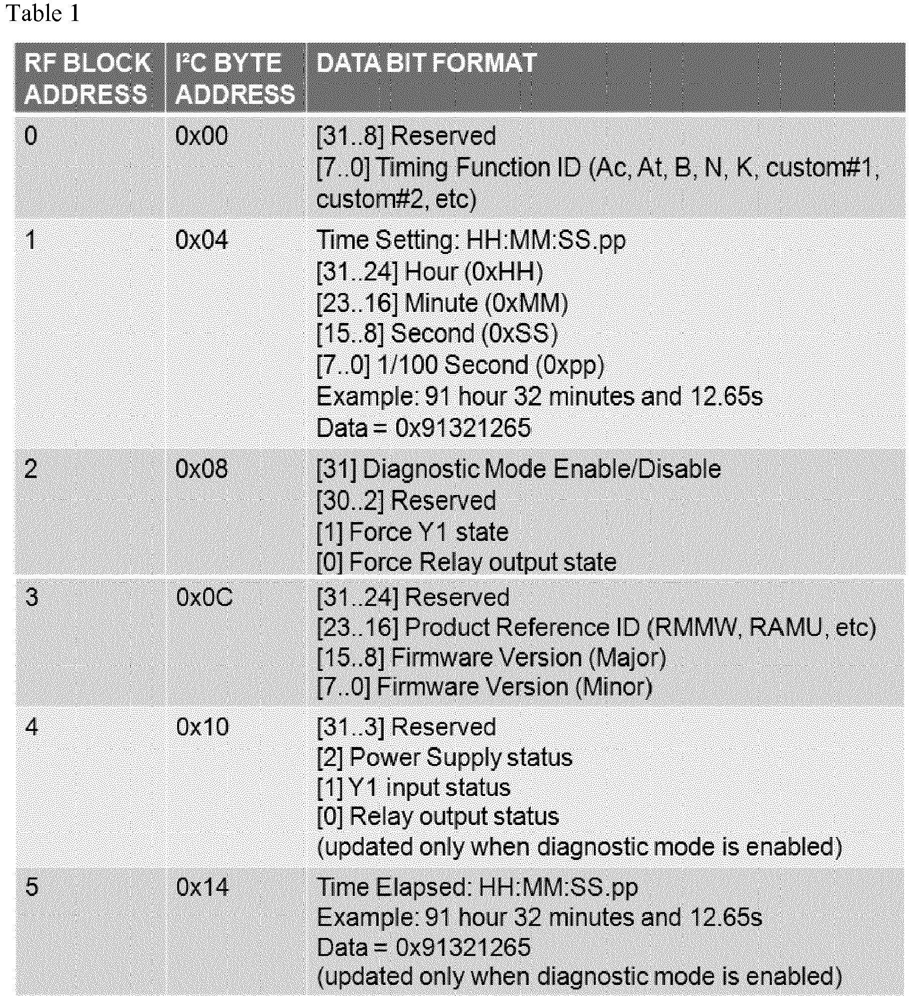

The graphic user interfaces, for example those described in FIGs. 7A, 7B and 7C, may thus be applicable for near field communication (NFC) with the relay. As it is appreciated that NFC traces its roots to radio-frequency identification (RFID), the relay and the method in accordance with various embodiments as described herein may also be similarly achieved using RFID technology instead of NFC technology.

NFC technology may be more preferred and may provide some advantages over RFID technology. For example, the use of RFID technology typically involves a RFID device (such as a RFID reader), which is typically operably connected to a computer or the like, and is typically a dedicated device. In contrast, NFC technology typically does not require a specialized or dedicated NFC device as NFC technology is readily available (or built-in) in a number of mass-consumer devices for example, mobile devices as exemplified in smartphones. Smartphones are generally of lower cost than dedicated devices and more freely available. Therefore, by using e.g. smartphones to provide NFC communication, adaption of NFC may prove to be more popular, user friendly, efficient and cost effective, etc.

Due to the growing popularity of NFC technology, for example, arising from the use of smartphones, it may be contemplated that an increasing number of other devices may also be implemented with NFC technology for the purpose of providing wireless NFC communication. In such a scenario, different devices using NFC technology may communicate with one another with ease. In this case, there may be an increasingly wide variety of devices with NFC technology that may possibly communicate with the switching device (e.g., a relay) according to various example embodiments as described herein.

Other advantages of using NFC technology for communicating with the switching device, or more specifically, a relay according to various example embodiments as described herein may generally include allowing an increased number of functions for the relay, increasing accuracy in setting the relay, reducing complexity in manufacture of the relay due to minimal use or absence of dials, allowing wireless communication with the relay that may be physically inaccessible and/or that may be positioned under low light (or poor visibility) conditions, allowing settings of specific relays arranged in close proximity within banks of relays, and facilitating failure analysis of the relays, etc.

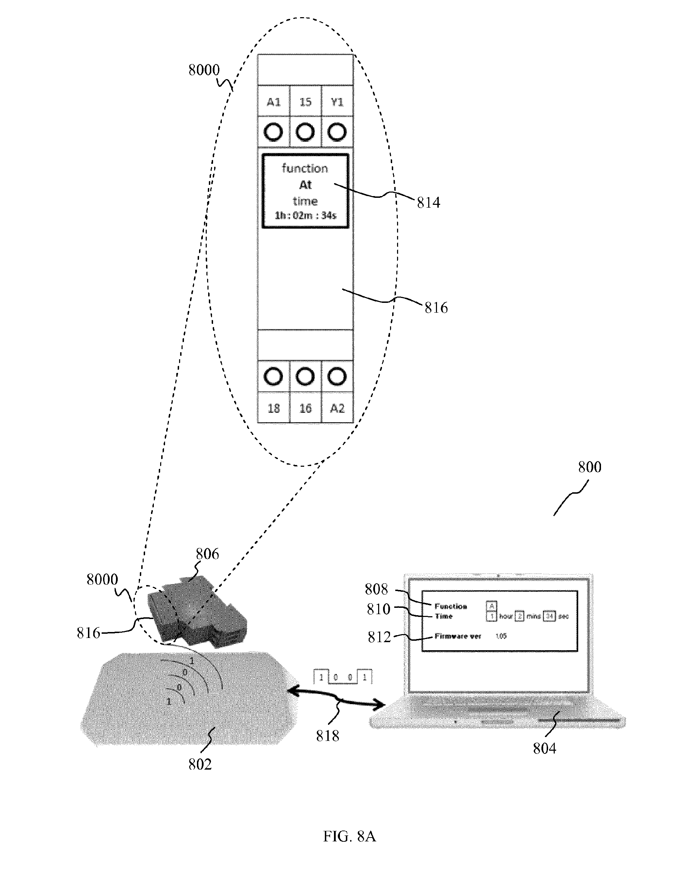

In a simplified example using RFID technology as shown in a schematic diagram 800 of FIG. 8A, a RFID reader 802 is coupled to a computer 804 having a program module to control or set a relay 806. In FIG. 8A, the program module (which may be substantially similar to the Apps described above with reference to FIGs. 7A, 7B and 7C) denoting Function 808 having a timer setting 810 of e.g. 1 hour 2 mins and 34 secs with firmware information 812 indicating a version of "1.05" sends binary data "1001" to the RFID reader 802. The RFID reader 802 then transmits the binary data "1001" to the relay 806. The relay 806 receives the binary data "1001" and a display 814 positioned at the front panel 816 of the relay 806 (as seen in an expanded view of an encircled area 8000) shows for example a time which reflects the timer setting 810 of 1 hour 2 mins and 34 secs.

It should be understood and appreciated that the RFID reader 802 may also function to receive or read data from the relay 806 and the received data may be transferred to the computer 804 via an interfacial connection 818 for analysis and/or display. For example, the interfacial connection 818 may be a hard-wired cable (for example but not limited to, a universal serial bus (USB) cable) connecting an input/output (I/O) port of the computer 804 and an I/O port of the RFID reader 802. In another example, the interfacial connection 818 may also be a wireless connection (for example but not limited to, via Bluetooth or infra-red technology) between the computer 804 and the RFID reader 812.

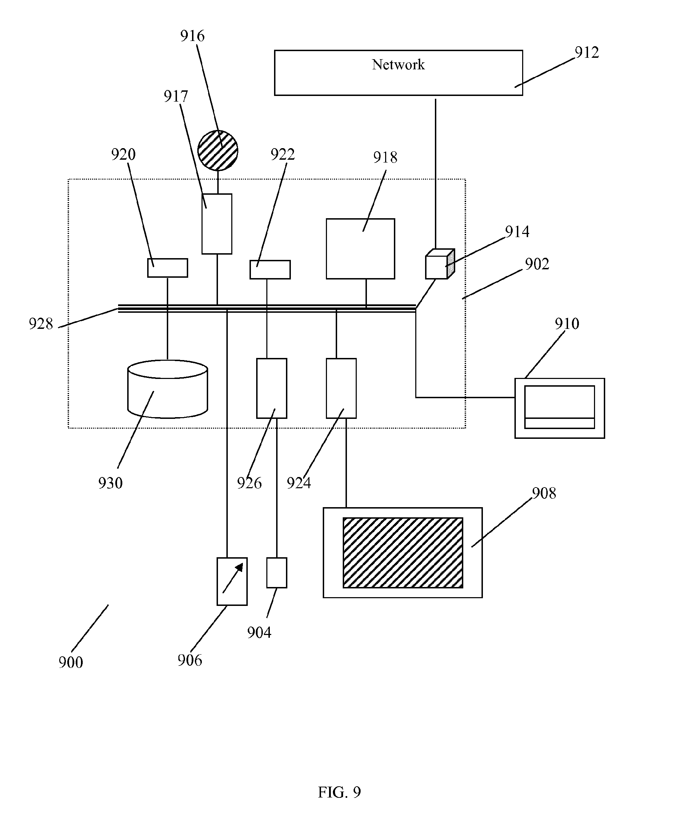

The computer 804 may be, for example, as described in the context of one or more computer systems, such as is schematically illustrated in FIG. 9.

The program module of the computer 804 may be, for example, implemented as software, such as a computer program being executed within a computer system 900, and instructing the computer system 900 to conduct an exemplary method of RFID (or NFC) communication with a switching device (e.g., a relay) via a RFID (or NFC) device (e.g. the RFID reader 802).

It should be appreciated and understood that in the exemplary method of NFC communication, in place of the RFID reader 802, a NFC reader coupled to the computer 804 via the interfacial connection 818 may be used instead. In another example, the NFC reader may be embedded in an external device such as a smartphone or a tablet computer. Since these external devices are equipped with display units, there may not be a need to use the computer 804 under these circumstances.

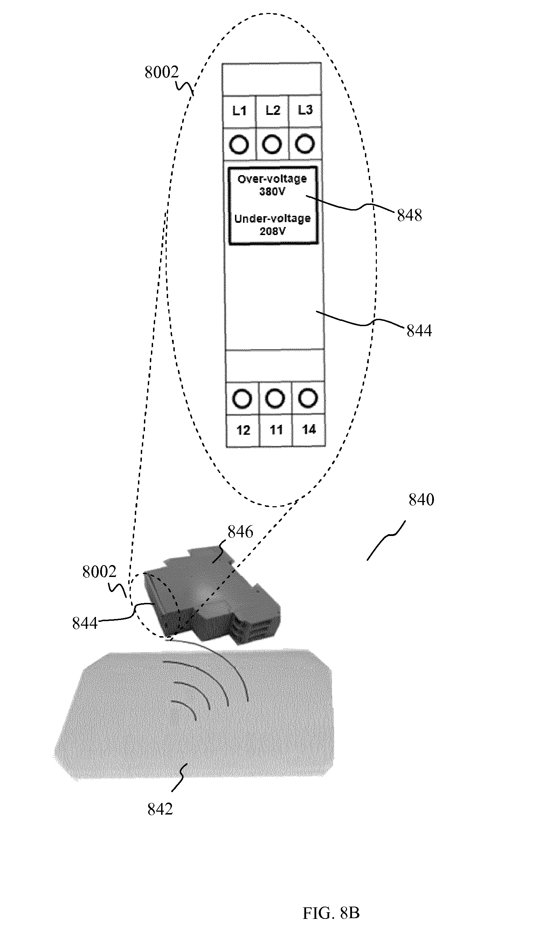

FIG. 8B shows one simplified example 840 using NFC (or RFID) technology. For the case of NFC technology, a NFC device 842 (e.g., a smartphone or a tablet computer, or a NFC reader coupled to a computer) has a program module to control or set a relay 846. In FIG. 8B, the program module may be based on an App created along the lines of those illustrated in FIGs. 7A, 7B and 7C. The App may be directed at providing a function to test an input (e.g. from the input sampling module 144 of FIG. 1D) to determine an over-voltage value (e.g., 380 V) and an under-voltage value (e.g., 208V) for the input. The front panel 844 of the relay 846 (as seen in an expanded view of an encircled area 8002) shows, for example, the over-voltage value and the under-voltage value. These information can also be displayed on a display unit (not shown) of the NFC device 842 itself.

Similar to FIG. 8A, it should be appreciated and understood that in the exemplary method of RFID communication, in place of the NFC device 842, a RFID reader coupled to the computer 804 via the interfacial connection 818 may be used instead.

The computer system 900 comprises a computer unit 902, input modules such as a keyboard 904 and a pointing device 906 and a plurality of output devices such as a display 908, and printer 910. A user can interact with the computer unit 902 using the above devices. The pointing device can be implemented with a mouse, track ball, pen device or any similar device. One or more other input devices (not shown) such as a joystick, game pad, satellite dish, scanner, touch sensitive screen or the like can also be connected to the computer unit 902. The display 908 may include a cathode ray tube (CRT), liquid crystal display (LCD), field emission display (FED), plasma display or any other device that produces an image that is viewable by the user.

The computer unit 902 can be connected to a computer network 912 via a suitable transceiver device 914, to enable access to e.g. the Internet or other network systems such as Local Area Network (LAN) or Wide Area Network (WAN) or a personal network. The network 912 can comprise a server, a router, a network personal computer, a peer device or other common network node, a wireless telephone or wireless personal digital assistant. Networking environments may be found in offices, enterprise-wide computer networks and home computer systems etc. The transceiver device 914 can be a modem/router unit located within or external to the computer unit 902, and may be any type of modem/router such as a cable modem or a satellite modem. In another example, the transceiver device 914 may be a RFID (or NFC) device and a connection such as the interfacial connection 818 (FIG. 8A) may also be provided between the computer unit 902 and the RFID (or NFC) device.

It will be appreciated that network connections shown are exemplary and other ways of establishing a communications link between computers can be used. The existence of any of various protocols, such as TCP/IP, Frame Relay, Ethernet, FTP, HTTP and the like, is presumed, and the computer unit 902 can be operated in a client-server configuration to permit a user to retrieve web pages from a web-based server. Furthermore, any of various web browsers can be used to display and manipulate data on web pages.

The computer unit 902 in the example comprises a processor 918, a Random Access Memory (RAM) 920 and a Read Only Memory (ROM) 922. The ROM 922 can be a system memory storing basic input/ output system (BIOS) information. The RAM 920 can store one or more program modules such as operating systems, application programs and program data.

The computer unit 902 further comprises a number of Input/Output (I/O) interface units, for example I/O interface unit 924 to the display 908, and I/O interface unit 926 to the keyboard 904. The components of the computer unit 902 typically communicate and interface/couple connectedly via an interconnected system bus 928 and in a manner known to the person skilled in the relevant art. The bus 928 can be any of several types of bus structures including a memory bus or memory controller, a peripheral bus, and a local bus using any of a variety of bus architectures.

It will be appreciated that other devices can also be connected to the system bus 928. For example, a universal serial bus (USB) interface can be used for coupling a video or digital camera to the system bus 928, or for coupling the RFID (or NFC) device (e.g., the RFID/NFC reader 802 (FIG. 8A)) to the system bus 928. The USB interface may as described in the context of the interfacial connection 818 (FIG. 8A) between the computer unit 902 and the RFID (or NFC) device.

An IEEE 1394 interface may be used to couple additional devices to the computer unit 902. Other manufacturer interfaces are also possible such as FireWire developed by Apple Computer and i.Link developed by Sony. Coupling of devices to the system bus 928 can also be via a parallel port, a game port, a PCI board or any other interface used to couple an input device to a computer. It will also be appreciated that, while the components are not shown in the figure, sound/audio can be recorded and reproduced with a microphone and a speaker. A sound card may be used to couple a microphone and a speaker to the system bus 928. It will be appreciated that several peripheral devices can be coupled to the system bus 928 via alternative interfaces simultaneously.

An application program can be supplied to the user of the computer system 900 being encoded/stored on a data storage medium such as a CD-ROM or flash memory carrier. The application program can be read using a corresponding data storage medium drive of a data storage device 930. The data storage medium is not limited to being portable and can include instances of being embedded in the computer unit 902. The data storage device 930 can comprise a hard disk interface unit and/or a removable memory interface unit (both not shown in detail) respectively coupling a hard disk drive and/or a removable memory drive to the system bus 928. This can enable reading/writing of data. Examples of removable memory drives include magnetic disk drives and optical disk drives. The drives and their associated computer-readable media, such as a floppy disk provide nonvolatile storage of computer readable instructions, data structures, program modules and other data for the computer unit 902. It will be appreciated that the computer unit 902 may include several of such drives. Furthermore, the computer unit 902 may include drives for interfacing with other types of computer readable media.

The application program is read and controlled in its execution by the processor 918. Intermediate storage of program data may be accomplished using RAM 920. The method(s) of the example embodiments can be implemented as computer readable instructions, computer executable components, or software modules. One or more software modules may alternatively be used. These can include an executable program, a data link library, a configuration file, a database, a graphical image, a binary data file, a text data file, an object file, a source code file, or the like. When one or more computer processors execute one or more of the software modules, the software modules interact to cause one or more computer systems to perform according to the teachings herein.

The operation of the computer unit 902 can be controlled by a variety of different program modules. Examples of program modules are routines, programs, objects, components, data structures, libraries, etc. that perform particular tasks or implement particular abstract data types. The example embodiments may also be practiced with other computer system configurations, including handheld devices, multiprocessor systems, microprocessor-based or programmable consumer electronics, network PCs, minicomputers, mainframe computers, personal digital assistants, mobile telephones and the like. Furthermore, the example embodiments may also be practiced in distributed computing environments where tasks are performed by remote processing devices that are linked through a wireless or wired communications network. In a distributed computing environment, program modules may be located in both local and remote memory storage devices.

Although the various components (e.g., antenna, memory module, etc.) are described as related to a relay, it would be appreciated and understood that these components are intended for provision of a control (and/or monitoring) device in the context of various examples described herein.

Furthermore, the "display" described in example embodiments is not limited to LCD, LED type displays etc. and may include other forms of display such as an e-paper display. An e-paper display may be implemented using e.g. a chip-based driver such as MSP430G2553 from Texas Instruments and a chip-based display component EK014AS014 from Pervasive Displays.

It will be appreciated by a person skilled in the art that other variations and/or modifications may be made to the specific embodiments without departing from the scope of the invention as broadly described. The present embodiments are, therefore, to be considered in all respects to be illustrative and not restrictive.

## Claims

1. A switching device comprising:
a switching module configured to perform switching for an electric circuit;
a processor module configured to control the switching module; and
a communication module coupled to the processor module, the communication module configured to effect communication between the processor module and an external device,
wherein the communication module is configured to communicate with the external device using a near field communication signal.

2. The switching device of claim 1, wherein the switching device is a relay;
the processor module is further configured to access information associated with the near field communication signal for communication with the communication module;
the communication module comprises
an antenna for communication with the external device.

3. The switching device of any one of claims 1 to 2, further comprising a memory module coupled to the processor module;
wherein the memory module is configured to store the information associated with the near field communication signal.

4. The switching device of any one of claims 2 to 3, wherein the information comprises a parameter of the switching device;
the parameter of the switching device comprises a timing parameter of the switching device, or a control parameter of the switching device, or both.

5. The switching device of any one of claims 2 to 4, further comprising a display configured to indicate the information associated with the near field communication signal.

6. The switching device of any one of claims 1 to 5, wherein the near field communication signal is configured to provide electromagnetic field energy to the switching device in a power-off mode; wherein in the power-off mode, the near field communication signal is further configured to provide an instruction to read a last known status and/or setting of the switching device.

7. A method of controlling a switching device, the method comprising:
providing a switching module configured to perform switching for an electric circuit;
using a processor module to control the switching module; and
effecting communication between the processor module and an external device using a near field communication signal.

8. The method of claim 7, wherein the switching device is a relay;
wherein the step of effecting communication between the processor module and the external device comprises receiving the near field communication signal via an antenna of the control device to determine receive information associated with the near field communication signal.

9. The method of claim 8, further comprising activating the switching module based on the receive information associated with the near field communication signal.

10. The method of claim 8 or 9, further comprising indicating the receive information associated with the near field communication signal via a display.

11. The method of any one of claims 8 to 10, further comprising storing the receive information associated with the near field communication signal in a memory module.

12. The method of claim 8, further comprising
retrieving switching device information from a memory module;
forming transmit information associated with another near field communication signal; and transmitting the transmit information using the another near field communication signal to the external device.

13. The method of any one of claims 8 to 11, wherein the receive information comprises a parameter of the switching device;
the transmit information comprises a parameter of the switching device;
the parameter of the switching device comprises a timing parameter of the switching device, or a control parameter of the switching device, or both.

14. The method of any one of claims 7 to 13, wherein the method is performed with the switching device in a power-off mode;
wherein the near field communication signal is configured to provide electromagnetic field energy to the switching device in the power-off mode;
wherein in the power-off mode, the near field communication signal is further configured to provide an instruction to read a last known status and/or setting of the switching device.

15. The method of any one of claims 7 to 14, wherein the external device comprises a mobile device having a near field communication function;
the method further comprising locating the external device at a distance of less than 25 cm from the switching device.
